# EUROPEAN PATENT APPLICATION

(11) **EP 2 369 767 A2**
(43) Date of publication of application: **28.09.2011**
(21) Application number: 11159113.7
(22) Date of filing: 22.03.2011
(51) Int. Cl.: H04J 14/02

(54) **Low cost high bit rate transceiving technique for optical networks**

(30) Priority: 23.03.2010 IL 20467010
(71) Applicant: ECI Telecom Ltd., Petach-Tikva 49517 (IL)
(72) Inventor: Melamed, Amitay, 76834 Moshav Satariya (IL)
(74) Representative: Modiano, Micaela Nadia

(57) **Abstract**

Technique for low cost delivery of a high bit rate electric signal via an optical network, by using a group of optical channels in the network for respectively delivering there-through a number of component electric signals of the high bit rate signal, The optical channels are respectively associated with different wavelengths, and each of the optical channels comprises optical elements suitable for conducting an optical signal having bandwidth significantly narrower than bandwidth of any of the component signals. The high bit rate electric signal is then successively restored from the optical signals delivered via the optical channels.

## Description

### Field of the invention

The present invention relates to the field of telecommunications, more specifically to a technique of providing high bit rate transmission via optical communication networks, mainly for Ethernet and WDM networks.

### Background of the invention

Nowadays, modern Ethernet optical networks and WDM (wavelength division multiplexed) optical networks require high bit rate equipment, for example optical transceivers and optical routers operating at bit rates of at least 100Gbps (100G).

Routers and transceivers which are known and widely used in the market for the above purposes are routers with 100G input/output interface.

Implementations proposed by known global manufacturers of high bit rate optical equipment utilize high cost components, namely high cost high bit rate transceivers. The main approach accepted in the industry is utilizing a dedicated wavelength in a WDM system for the high bit rate transmission. To perform high bit rate transmission (such as 100G) over one wavelength, a high accuracy digital signal should be generated and very high bandwidth requirements should be satisfied, to allow adequate transmission of the signal to long distances of about 850-1500 km. Such requirements result in that the conventional high bit rate transceivers are complex and extremely expensive. The cost of such a high bit rate 100 G transceiver (for example, using a dual polarization technique and DQPSK coding) could be estimated as about 85K-100K $ per unit.

### Object and summary of the invention

It is therefore one of the objects of the present invention to propose a relatively simple technique for arranging high bit rate optical transmission in WDM optical networks at a competitive price - in a specific case, a technique for arranging a 100G optical transmission channel. It is an additional object of the invention that the technique could be used for providing an add on device/interface to the existing, currently installed basic equipment. Such a solution would be highly desirable and efficient for Metro networks.

The proposed solution is especially effective in Metro networks since it allows utilizing a typical feature of WDM Metro networks- presence of a plurality of wavelengths (channels), many of them are usually available/free or relatively easy to obtain.

According to a first aspect of the invention, the above object can be achieved by a method which comprises presenting a high bit rate signal (at a transmitting side/site), by a number of component, intermediate bit rate signals and transmitting these component signals in the form of optical signals via respective separate optical channels (for example, selected in a Metro optical network), wherein each of the optical channels being intended for substantially narrowing bandwidth of the corresponding component signal (say, are equipped with such "narrowband" optical elements or components for carrying an optical signal corresponding to a specific component signal). These means/equipment of each of the optical channels should be " linear" (i.e., have substantially linear characteristics) in respect of electric incoming power and optical outgoing power, so as to further allow restoring said component signal and then assembling a received high bit rate signal (at the receiver side of the line/of a transceiver) from the restored received component signals.

The term "substantially (significantly, essentially) narrowing bandwidth of a component signal" should be understood as creating an optical signal carrying data of the component signal (preferably electric signal), but having bandwidth narrower than the bandwidth conventionally required for adequate transmission of the component signal.

Actually, the bandwidth of said optical signal is narrower than the bandwidth conventionally required for adequate transmission of the corresponding component (electric) signal.

A coefficient of narrowing bandwidth of a component electric signal (i.e., a bandwidth compression coefficient) may, for example, be found between approximately 2.5 and 4.

The received high bit rate signal should be (and, by the invention, is ensured to be) substantially identical to the transmitted high bit rate signal. To achieve that, equipment at the receiving side preferably comprises functional elements also having substantially linear characteristics (at least O/E converters at the receiving side).

It should be kept in mind that in this application we speak about data carrying signals, so the high bit rate data carrying signal is transmitted, in a totally non-standard way, via narrow bandwidth optical channels which are expected to seriously damage data carried by the initial signal.

Obviously, as a result of the substantial narrowing of the bandwidth, serious inter-symbol interference (ISI) appears in the optical signals being conducted via the optical channels. However, as has been shown by the Inventor, the accumulated ISI can successfully be overcome by suitable linear equipment at the receiver side and effective digital signal processing.

The desired degree of linearity of the linear characteristics may be expressed as follows: the characteristics is formed by at least 2⁵ levels of conversion per bit (for example, at least 2⁵ levels of conversion per binary step between a logical "0" a logical "I", being of about 200 mV).

According to a second aspect of the invention, the object can be achieved by providing a low cost unit (transceiver) for transmitting and/or receiving high bit rate signals via an optical network, comprising one or both of a transmitter side and a receiver side. A transmitter side of the transceiver enabling delivery of a high bit rate signal by using a group of optical channels having different wavelengths for delivery of a number of component signals of the high bit rate signal, wherein the optical channels have constrains conventionally suitable for transmitting only low bit rate/narrow bandwidth optical signals. The high bit rate signal can be, for example, a 10OGbps electric signal preliminarily encoded by On-Off-Keying OOK, or quadrature amplitude modulation QAM, or Optical DuoBinary Coding ODB technique, while constrains of the optical channels are such to allow transmitting only a 10G signal.

The existing network usually comprises a network element (such as a router) which may preliminarily divide the high bit rate electrical signal of interest into a plurality of signals transmitted in parallel, The proposed transceiver may arrange them into said number of component, intermediate bit rate electrical signals, which are then converted into optical signals having bandwidth essentially narrower than the bandwidth conventionally required for adequate (errorless) transmission of the component signals.

Preferably, the transceiver also comprises a receiver side being means for converting such optical signals transmitted via the optical network (say, from another node), into received component signals, means for processing thereof and further assembling there-from a received high bit rate signal.

The proposed transceiver may comprise symmetrically arranged the transmitter and receiving sides, using the same frequency of signals, the same number of channels and the same group of optical channels at all. However, the "transceiver" unit may actually comprise only one of the sides at one node (it should then be called just a transmitter or a receiver), or may use different groups of optical channels (both from the point of their number and their wavelength, and from the point of frequency of signals transmitted there-through) at the receiving side and the transmitter side.

Formally speaking, there is proposed a unit for transmitting and/or receiving high bit rate signals carrying data via an optical network, the unit comprising one or both of the following:
*a transmitter side of the unit,* for providing a first group of component electric signals of a transmitted high bit rate signal, for transmitting said first group of component electric signals in the form of a respective first group of optical signals via a first group of optical channels (associated with different wavelengths in said network);

- per each of the optical channels, the transmitter side comprising E/O optical elements (optical components) suitable for converting a specific component electric signal into an optical signal carrying data of said specific component electric signal but having bandwidth essentially narrower than bandwidth of said specific component signal (and narrower than the bandwidth conventionally required for adequate transmission of the component signals),
*a receiver side of the unit,* for receiving a second group of optical signals carrying data over a respective second group of optical channels (associated with different wavelengths in the network),
the receiver side, per each optical channel of the second group, comprising O/E optical elements for converting a particular optical signal of the second group into a corresponding component electric signal of a second group, and elements for digitizing said component electric signal and restoring data carried by said particular optical signal,
wherein bandwidth of any optical signal of the second group is significantly narrower than bandwidth of any component electric signal of the second group.

Preferably, in the transceiver the optical channels of the first group and the optical channels of the second group are the same group of optical channels utilized in both directions for bidirectional transmission.

For example, the initial high bit rate signal of about 112 Gbps can be divided into four component signals each having bit rate of about 28 Gbps and bandwidth of about 28 GHz, while the respective four optical channels may have optical components enabling bandwidth of only 10 GHz per channel. Such a proportion can be achieved for a high bit rate signal initially coded by O.O.K. coding, where the E/O conversion block for each component signal in the corresponding optical channel allows obtaining a bandwidth compression coefficient found approximately between 2.5 and 4.

In other words, the bandwidth of outgoing optical signals depends on the bit rate of the initial signal and the system of coding (the E/O block 16.1-2-3 for O.O.K. coding gives 2.5 to 4 times of the BW compressing, so the component signals having BW of 28 GHz turn into the optical signals having BW of about 10Ghz.

According to the principle stated above, the desired delivery of a high bit rate signal via an optical network might be performed by narrowing bandwidth of transmission of the high bit rate signal up to bandwidth sufficient for very low bit rate optical signals.

The Inventor proposes performing that by the following steps:
A) presenting the initial high bit rate electrical signal as a number of component, intermediate bit rate electrical signals. (It can be performed, say, by multiplexing a group of parallel sub-signals of the initial electrical high bit rate signal into a smaller group of intermediate bit rate signals);
B) - what is most important - transmitting these component, intermediate bit rate electric signals via respective separate optical channels equipped with low cost optical equipment/components, each such channel providing still a lower bandwidth than the corresponding component signal requires - in other words, each of the intermediate bit rate component signals is converted into a narrow bandwidth optical signal.

These optical signals are intended to be received at a receiver side of the optical transmission line (for example, at the receiver side of another inventive transceiver located at the receiver side of the path), converted into electric component signals having intermediate bit rate, processed and finally assembled so that the received high bit rate signal is restored substantially to its initial form. The Inventor has shown that, contrary to the conventional point of view, the desired high quality restoration is possible.

Some examples of such equipment/devices will be described in the detailed description.

For example, for the case of 100G, the proposed low cost transceiver system may firstly handle, at its electric interface, a high bit rate (100G) signal as ten sub-signals of 10-12G each, propagating in parallel, which are then re-arranged into a number of intermediate bit rate signals (say, four 25Ghz-28GHz signals). The intermediate bit rate signals may then be transmitted over different DWM optical channels by means of optical equipment adapted for transmitting signals having BW narrower than the intermediate ones. For example, four WDM optical channels may be equipped with 10GHz optics each, and will thereby be able to carry four optical signals having BW of 10Hz. (The mentioned optics comprises at least an E/O conversion block: an optical wavelength source and a linear E/O modulator). Such a solution allows operating without or with a significantly reduced number of Polarization Mode Dispersion (PMD) and Chromatic Dispersion (CD) compensation modules (which would be required for the 100G signal in conventional transceiver schemes), and to keep the PMD and CD at the same level as in regular 10G optical channels.

The accumulated inter-symbol interference (ISI) can be then compensated by using linear optical elements at the receiver side and a DSP block utilizing, for example, a MLSE algorithm. It has been shown by the Inventor that such a DSP block overcomes both the chromatic dispersion (CD) created by the fiber, and the inter-symbol interference (ISI) by the same algorithm.

The total cost estimation for the above-proposed optical transceiver would be of about 6-15K$. For comparison, a conventional high bit rate 100Gbps transceiver using the dual polarization technique and DQPSK coding would cost about 75-80K$.

In practice, a high bit rate signal (of about 100Gbps) may arrive to an existing optical network which is not designed for transmitting such high bit rate signals. At an outside or border router the high bit rate signal may be presented as 10 signals 11Gbps each and applied to the transceiver's interface. The proposed transceiver may comprise a multiplexer (MUX) for arranging these 10 signals into a smaller number (say, four) intermediate bit rate signals to be transmitted further via four separate optical channels which are supposedly available in the existing optical network. The MUX preferably comprises coding units (say, OOK, DPSQ, ODB coders) for coding the outgoing signals. The coding units may be located separately.

The above-described 100G transceiver can be designed so as to allow transmission of the high bit rate signal via optical channels having interchannel spacing of 25-50GHz since the channels carry low bandwidth optical signals. Due to that, the proposed technology allows handling high bit rate signals with reduced requirements to dispersion compensation modules/fibers (DCF), for distances of about 40 km of uncompensated optical fibers, which is unexpected and quite surprising for the present state of the art.

Such a transceiver makes possible to smoothly add a high bit rate (say, 100G) transmission line to an existing, already deployed optical network which is designed for transmitting only signals having much lower bandwidth, and without changing the network's design.

Though, in the present state of the art, transmission of high bit rate signals via a WDM optical networks with small channel spacing seems impossible and counter-productive (and though network designers do not count on such a way and do not take a chance to check such a possibility), the Inventor has proven that the desired result can be achieved and has proposed specific measures for that.

The invention will be described in more details when the description proceeds.

### Brief description of the drawings

The invention will be illustrated and further described with the aid of the following non-limiting drawings, in which:
**Fig. 1** is a schematic block diagram of one embodiment of the proposed transceiver system, which can also be understood as a block diagram of the transceiver's chip and an illustration of the proposed method.
**Fig. 2** illustrates one embodiment of arranging the receiving side of the proposed transceiver system.

### Detailed description of the preferred embodiments

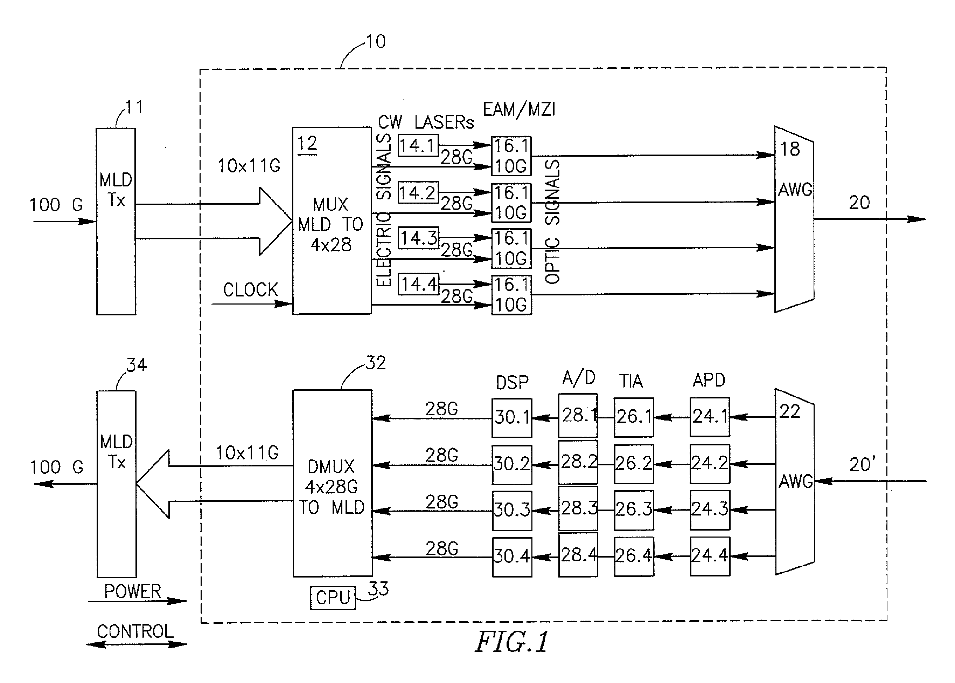

**Fig. 1** shows an example 10 of the proposed low cost transceiver (in the dotted contour). The transceiver is connected to a 100Gbps transmitter 11 via its electrical 10-line interface. The transceiver 10 comprises a multiplexer (MUX) 12. Block 11 is a Multi Lens Distribution (MLD) transmitter which issues 10 parallel electric sub-signals; it may be part of an outside node such as a router. Block 11 may be a 100G OTN or Ethernet line side transceiver providing bit rate of 111.809973 G (in this specific example). The 10 sub-signals are arranged in the MUX 12 say, by a Multi Lens Distribution (MLD) technique, into four electric signals with intermediate bit rate of 28Gbps and bandwidth of approximately 28GHz each (if OOK coding is used for the signals). Together, the four signals actually present the optical BW of the initial high bit rate signal.

Then the optical BW of the ∼100G signal is narrowed over the transmitting fiber (20), by transmitting the four 28G signals via four WDM channels respectively suitable for much more narrow-band optical signals. Each of the channels is equipped with an E/O converter comprising a Continuous Wavelength CW laser (14.1, 14.2, 14.3, 14.4) and an optical modulator (16. 1. 16.2, 16.3, 16.4), in this case - a 10G optical modulator. The modulators demonstrate quite strict linear characteristics when converting the incoming 28Gbps, 28GHz electrical signals into the four outgoing 10GHz optical signals. In this example, each of the modulators comprises an Electro Absorption Modulator or a Mach-Zehnder Interferometer. The four optical signals are combined by an Array of Waveguides (AWG) 18 and the combined optical signal is transmitted over the optical fiber 20. Since the BW of each component signal has been seriously reduced, the four separate optical signals have pretty bad quality, become smashed, actually analog, and suffer from inter-symbol interference (ISI).

To compensate the ISI upon passing the signal over the optical line, effective linear conversion and processing techniques should be utilized. The Inventor has shown that an MLSE (Maximum Likelihood Sequence Estimation) algorithms can be used for Digital Signal Processing at the receiver side of the system to successfully restore the signals.

Let us suppose that a signal similar to that transmitted via the fiber 20 is sent to the transceiver 10 via fiber 20' from another site located somewhere beyond the east side of the drawing. Before the DSP operation, the signal is received at AWG 22 of the receiver's side of the transceiver, split into four narrow-BW optical signals and fed to four photodiodes (say, PIN diodes or Avalanche Photo Diodes APD 24.1 - 24.4) for O/E conversion of the signals. Advanced APD or PIN devices are utilized to enhance the receiver's performance for detecting/recognizing signals with the narrow BW.

It should be noted that the E/O and O/E converters, (as well as the amplifiers at the receiver side) preferably exhibit linear characteristics having at least 2⁵ levels of conversion per bit (i.e., for example at least 2⁵ levels of conversion per one binary step of about 200 mV between a logical zero level and a logical one level).

Upon O/E conversion, the signals are then fed onto amplifiers (trans-impedance amplifiers TIA 26.1-26.4 are proposed) which, as well as the photodiodes 28, have to exhibit strict linear characteristics during the signals' conversion. Upon analog-to-digital A/D conversion in the blocks 28.1-28.4, (which always have linear characteristics), the low BW (10G) signals are applied to DSP blocks 30.1-30.4 which restore the signals quality and forward them as 28Gbps/28GHz component signals to DMUX 32 of the transceiver and then to an outside receiver 34 (in the form of 10 parallel sub-signals serving as interface).

The transceiver is controlled by a central processing unit CPU 33, based on the information obtained from external systems. The CPU may issue control signals outside as well. The transceiver 10 may comprise its local power supply block.

Due to the BW narrowing effect it is possible to save on CD and PMD expenses. The proposed system allows keeping them approximately to the same level as in the today's 10G optics. It should be noted that CD blocks are quite expensive elements required in case of using conventional schemes of high bit rate transceivers.

The proposed transceiver's scheme would support up to 850Km fiber distance for the high bit rate signal (100G in our example) according to the same design rules as the today's low bit rate/BW links (10G in our example).

Not only the 100G signal may be transmitted via 10G optical channels using the proposed principle of low cost transceiver.

In a different example, a 10G bit/sec transmission could be done with 2.5G GHz optics, i.e., via an optic channel suitable for 2,5 GHz signal;

In another example, a 25G bit/sec transmission could be performed via a 8GHz - suited optic channels in a similar way.

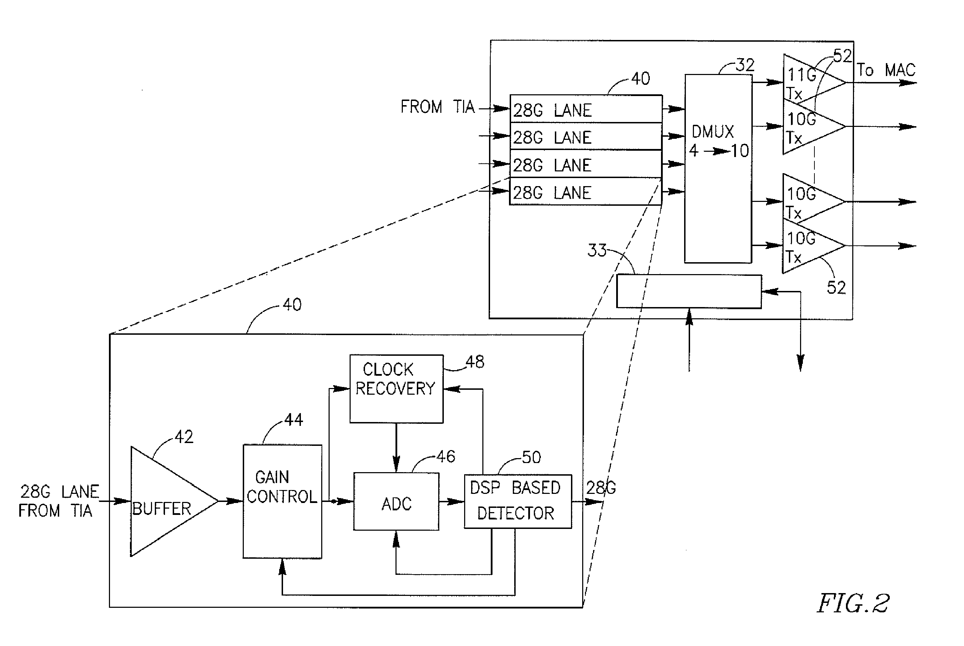

**Fig. 2** schematically illustrates another, more detailed embodiment of the receiver's side of the proposed low cost transceiver. Fig. 2 provides more details for the processing of a component signal upon being handled by any of TIAs (26.1-26.4). Any of the analog electric signals obtained from the corresponding optic signals is fed to its corresponding "28G Lane" 40. Each of such lines comprises an input buffer 42, an automatic gain control block 44, an analog to digital converter ADC 46 supported by a clock recovery block 48 and a DSP based detector 50. The block 50 is a hardware based DSP based detector, suitable for high bit rate signals, provided with its internal Control and processing unit. The DSP Block 50 controls the gain unit 44, the clock unit 48 and the analog to digital converter 46.

Thus restored four intermediate bit rate 28G signals are fed to DMUX 32, where these four signals are demultiplexed to form ten 11Gbps signals which are forwarded to the customers by transmitter amplifiers 52. The block 34 is preferably part of the same or another router, outside the transceiver.

Operation of the receiver's side of the transceiver is controlled by the same control block 33, by utilizing commands of a software control program of the transceiver and by exchanging commands and information with the Tx and Rx of the transceiver.

It should be appreciated that the invention has been described and illustrated with the aid of non-limiting examples only, that other embodiments could be arranged for illustrating the inventive principle and they should be considered part of the invention as far as being defined by the claims which follow.

## Claims

1. A method for delivery of a high bit rate electric signal via an optical network, by using a group of optical channels in said network for respectively delivering there-through a number of component electric signals of the high bit rate signal, wherein the optical channels being respectively associated with different wavelengths, each of the optical channels comprising optical elements suitable for conducting an optical signal having bandwidth significantly narrower than bandwidth of any of said component signals, the method further comprises restoring the high bit rate electric signal from said optical signals delivered via said optical channels.

2. The method according to Claim 1, for transmitting the high bit rate electric signal from a transmitting site to a receiving site, the method comprising
- dividing the high bit rate electric signal into the number of said component electric, intermediate bit rate signals,
- converting said electric component intermediate bit rate signals into respective said optical signals, each of the optical signals having substantially narrowed bandwidth in comparison with that of a corresponding component electric signal ;
- carrying said optical signals over respective said optical channels to the receiving site, and
- restoring a corresponding received component signal from each said optical signal upon receiving thereof at the receiving site, for further obtaining a restored high bit rate signal from respective received component signals, wherein the restored high bit rate signals is substantially identical to the transmitted high bit rate signal.

3. The method according to Claim 2, comprising providing each of said optical channels, at the transmitting site, with bandwidth (BW) narrowing means comprising an electric to optic (E/O) modulator having a linear characteristics between its input power and its output power and, at the receiving site, with restoration means for restoring said received component signal from said received optical signal, the restoration means comprising an optic to electric (O/E) photodiode and an amplifier, each of the latter having a linear characteristics between its input power and its output power, the restoration means also comprising an analog to digital (A/D) converter and a digital signal processing (DSP) block.

4. The method according to any one of the preceding claims, wherein the bandwidth of said optical signal is narrower than the bandwidth required for adequate transmission of the corresponding component electric signal.

5. The method according to any one of the preceding claims, wherein a bandwidth compression coefficient is approximately between 2.5 and 4.

6. A unit for transmitting and receiving high bit rate signals carrying data via an optical network, the unit comprising one or both of the following:
a transmitter side, for providing a first group of component electric signals of a transmitted high bit rate signal, for transmitting said first group of component electric signals in the form of a respective first group of optical signals via a first group of optical channels;
per each of the optical channels, the transmitter side comprising electric to optic (E/O) optical elements suitable for converting a specific component electric signal into an optical signal carrying data of said specific component electric signal but having bandwidth essentially narrower than bandwidth of said specific component signal,
a receiver side, for receiving a second group of optical signals carrying data over a respective second group of optical channels,
the receiver side, per each optical channel of the second group, comprising optic to electric (O/E) optical elements for converting a particular optical signal of the second group into a corresponding component electric signal of a second group, and elements for digitizing said component electric signal and restoring data carried by said particular optical signal,
wherein bandwidth of any optical signal of the second group is significantly narrower than bandwidth of any component electric signal of the second group.

7. The unit according to Claim 6, further comprising
- means for dividing said transmitted high bit rate electric signal into said first group of component, intermediate bit rate, electrical signals,
- means for assembling a received high bit rate electric signal from the component electric signals of the second group, having intermediate bit rates.

8. The unit according to any one of Claims 6 or 7, wherein
the transmitter side comprises said E/O optical elements forming E/O converters, for narrowing bandwidth of said component electric signals of the first group;
the receiver side comprises said O/E optical elements forming O/E converters, and also comprises amplifiers, analog to digital (A/D) converters and digital signal processing (DSP) blocks for compensating inter-symbol interference (ISI) of data carried by the received optical signals of the second group.

9. The unit according to any one of Claims 6 to 8, wherein at least said E/O optical elements and said O/E optical elements have linear conversion characteristics between input and output power, with linearity of said characteristics being not lower than 2⁵ levels of conversion per bit.

10. The unit according to any one of Claims 6 to 9, designed for transmitting the high bit rate electric signal of about 100 - 112 Gbps coded using OOK coding, said component intermediate bit rate signals of first and/or second groups are four signals of about 25 - 28 Gbps, and each of the optical signals has bandwidth of about 10GHz.

11. The transceiver according to any one of Claims 8 to 10, wherein the transmitted high bit rate signal is a 100Gbps OOK coded signal, and wherein
at least one of the E/O converters of the transmitter side comprises a continuous wavelength (CW) laser, and a 10GH modulator comprising an electro absorption modulator(EAM) or Mach-Zehnder interferometer (MZI);
the receiver side, for at least one optical channel, comprises the O/E converter including an avalanche photo diode APD or a PIN diode,
the amplifier being a trans-impedance amplifier TIA,
the A/D converter and the digital signal processing DSP block utilizing Maximum Likelihood Sequence Estimation (MLSE) algorithm.
